# EUROPEAN PATENT APPLICATION

(11) **EP 1 596 269 A2**
(43) Date of publication of application: **16.11.2005**
(21) Application number: 05009682.5
(22) Date of filing: 03.05.2005
(51) Int. Cl.: G06F 1/00

(54) **A system and method for rendering selective presentation of documents**

(30) Priority: 03.05.2004 US 836210
(71) Applicant: Aladdin Knowledge Systems, Ltd., Tel Aviv 61110 (IL)
(72) Inventor: Dondl, Werner, 85570 Markt Schwaben (DE); Jascau, Vasile Adrian, 81369 München (DE); Sedlmayer, Dieter, 82205 Gilching (DE); Arad-Allan, Laila Alladin Knowledge Systems Ltd., Tel-Aviv 61110 (IL)
(74) Representative: Grimm, Christian

(57) **Abstract**

The present invention is directed to a system for rendering selective presentation of a document and a method therefor, said system comprising: an encrypting logic, for securely storing the content of said document; a decrypting logic, corresponding to said encrypting logic, for decrypting the encrypted document, wherein at least a part of said decrypting logic is embedded within a first security token; and a selective presentation document viewer, for rendering selective presentation of the decrypted document. Preferably, both, the selective presentation document viewer and the document, are protected by the same security token.

## Description

### Field of the Invention

The present invention relates to the field of data security. More particularly, the invention relates to a system and method for rendering selective presentation of documents.

### Background of the Invention

Key documents of an enterprise are packaged in a variety of ways, such as service manuals, product manuals, legal documents, engineering plans, financial statements, medical records and so forth. Due to the simplicity of generating such documents by electronic means, the ease of sending electronic documents over communication networks and the low cost of electronic storage, nowadays such documents also have an electronic form. As such, key documents of an organization are exposed more than ever to unauthorized objects (users, eavesdropping code, etc.). Consequently, in this click-to-access world, it is critical to protect all of the electronic documents of an organization from unauthorized objects with strong security means.

It is therefore an object of the present invention to provide a method and system for rendering selective presentation of a document. The term "selective presentation" of a document refers herein to electronically presenting a document such that one or more of the duplication functions (such as copying a content to the clipboard, saving, printing, and so forth) of the electronic presentation are disabled.

For example, a typical Web browser enables saving a displayed HTML file, printing the displayed HTML file, copying a part of a displayed HTML file to the clipboard and so forth. By disabling one or more of these abilities, the presentation of the HTML file is considered herein as "selective".

Other objects and advantages of the invention will become apparent as the description proceeds.

### Summary of the Invention

In one aspect, the present invention is directed to a system for rendering selective presentation of a document, said system comprising: an encrypting logic, for securely storing the content of said document; a decrypting logic, corresponding to said encrypting logic, for decrypting the encrypted document, wherein at least a part of said decrypting logic is embedded within a first security token; and a selective presentation document viewer, for rendering selective presentation of the decrypted document. Preferably, both, the selective presentation document viewer and the document, are protected by the same security token.

In another aspect, the present invention is directed to a method for securely rendering selective presentation of a document, the method comprising the steps of: providing a security token, for hosting at least one part of a decrypting logic; providing a selective presentation document viewer, operative in conjunction with the decrypting logic, for rendering selective presentation of the document; encrypting the document by an encrypting logic corresponding to the decrypting logic; decrypting the encrypted document by the decrypting logic; and rendering selective presentation of the document by the viewer.

The viewer may be a Web browser, a word processor, a text editor, a PDF editor, a PDF viewer, multimedia editor, multimedia player, and so forth.

The method may further comprise protecting the viewer by a security token. The method may further comprise enabling at least one of the duplicating functions according to a licensing policy thereof.

### Brief Description of the Drawings

The present invention may be better understood in conjunction with the following figures:
Fig. 1 schematically illustrates a process of rendering selective presentation of a document, according to a preferred embodiment of the invention.
Fig. 2 schematically illustrates a process of encrypting a document, according to a preferred embodiment of the invention.
Fig. 3 schematically illustrates a process of displaying an encrypted document, according to a preferred embodiment of the invention.
Fig. 4 is a flowchart of a process of rendering selective presentation of a document, according to a preferred embodiment of the invention.
Fig. 5 is a flowchart of a process of rendering selective presentation of a document, wherein the viewer is protected by a security token, according to a preferred embodiment of the invention.

### Detailed Description of Preferred Embodiments

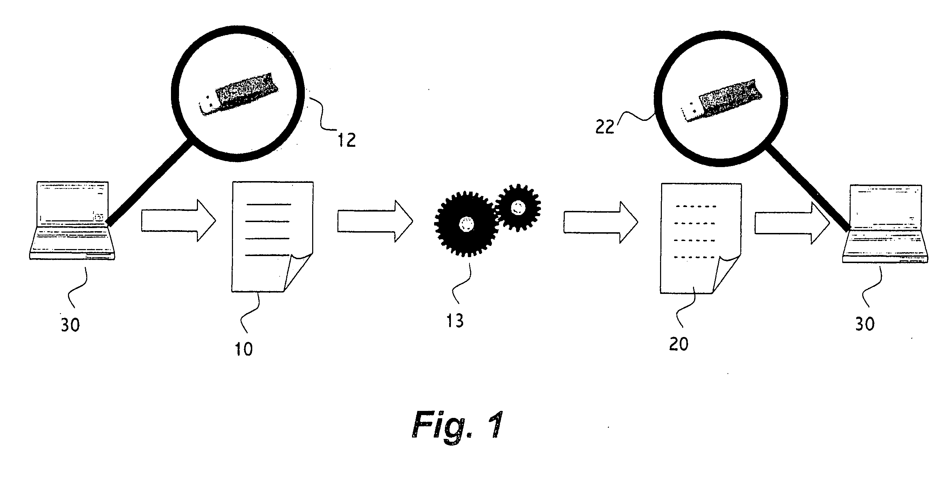

Fig. 1 schematically illustrates a process of rendering selective presentation of a document, according to a preferred embodiment of the invention.

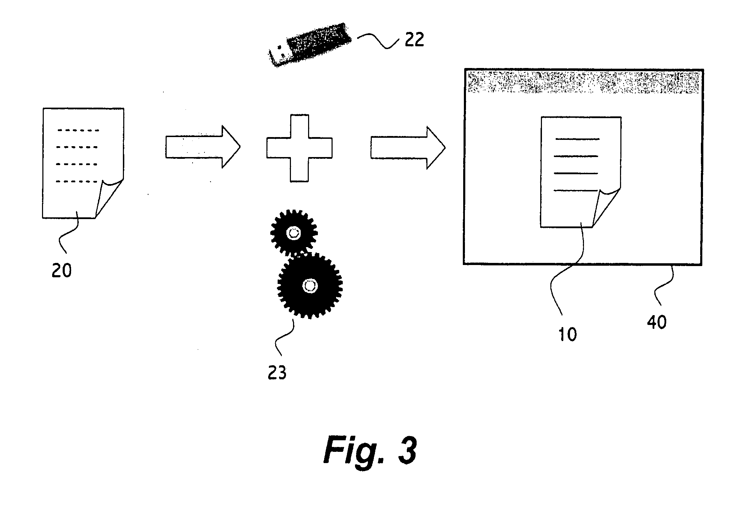

The author of a document 10 encrypts it with the encrypting logic 13, resulting with an encrypted document 20. The security logic 13 is characterized by employing a security token 12, in which at least a part of the security logic 13 is embedded. The encrypted content 20 can be decrypted only via the corresponding decryption logic 23 (see Fig. 3), at least a part of which is embedded within the security token 22, and can be displayed only by a corresponding viewer 40 (see Fig. 3). The viewer 40 is characterized also by selective duplicating functionality, i.e. the functionality of printing the document, copying the document to the clipboard, etc. is disabled.

A security token is a hand-held hardware device, typically used for security related issues, such as authentication and ciphering. In order to carry out the security related activities, security tokens typically comprise a non-volatile memory, for storing ciphering keys. More sophisticated security tokens typically comprise processing means, such as CPU and smartcard chip. The HASP and the eToken, which are manufactured by Aladdin Knowledge Systems, are examples of security tokens.

As mentioned above, at least a part of the encryption logic is embedded within the security token 12, such as ciphering keys and programming code. Implementing the ciphering logic (encrypting, decrypting logic) within a security token provides a better security level, since the security token can be carried by the user, thereby assuring that only the user accesses the content of the protected document. Moreover, as a security token is an external device to a host, using security tokens for the ciphering logic increases the security level. From the user convenience point of view, by using a security token a user is not tied up to a certain computer, but can use any computer for viewing a secured document.

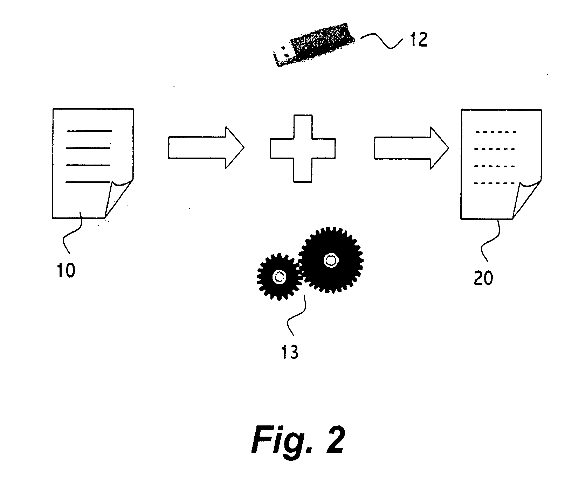

Fig. 2 schematically illustrates a process of encrypting a document, according to a preferred embodiment of the invention. The document 10 is encrypted with the encrypting logic 13, resulting with an encrypted document 20.

The encrypting logic 13 is characterized by employing a security token 12, in which at least a part of the encrypting logic 13 is embedded. For example, the security token 12 may hold a private key, which is provided to the host for encrypting document 10. In another example the whole document 10 is transferred to the security token 12, which performs the encryption and returns the encrypted document 20 to the host to which the security token 12 is connected. Of course, a high security level is also achieved even if only a part of the encrypting programming code can be present on the security token 12, such as a core function.

Fig. 3 schematically illustrates a process of displaying an encrypted document, according to a preferred embodiment of the invention. Document 20 is decrypted by the decrypting logic 23, resulting with a document 10.

The encrypting logic 13 is characterized by employing a security token 22, in which at least a part of the encrypting logic 13 is embedded. For example, the security token 22 may hold a public key, which is provided to the host for decrypting document 20. In another example the whole document 20 is transferred to the security token 22, which performs the decryption, and returns the decrypted document 10 to the host to which the security token 22 is connected. Of course, a high security level is also achieved even if only a part of the decrypting programming code can be present on the security token 22, such as a core function.

Then, the decrypted document 10 is displayed by viewer 40. Viewer 40 is characterized by the ability to disable duplicating functions such as Save, Save as, Print, Copy to the clipboard, transferring the decrypted data, etc.

Those skilled in the art will appreciate that a viewer can be programmed by its manufacturer to disable duplicating functions of the viewer, since the manufacturer has access to the programming code of the viewer. For example, a manufacturer may add functions to disable the viewer's duplicating ability, like hooking functions provided by the environment or operating system. By these hooks the manufacturer (or vendor) can determine if certain operations of the viewer are allowed or not, depending on the usage terms defined for the product (or document). Similar approaches hook the message chain or add filters to the operating system. This additional code could also be added via an automatic tool that modifies the viewer in its compiled state and does not require modification of the source code of the viewer.

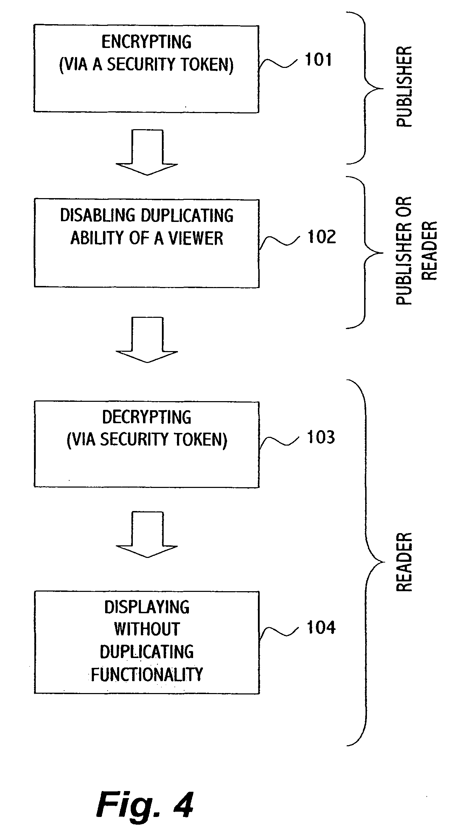

Fig. 4 is a flowchart of a process of rendering selective presentation of a document, according to a preferred embodiment of the invention.

At the publisher's site:
· At 101, the document is encrypted. Preferably, at least a part of the encryption is carried out by a security token.

At the publisher's site or the reader's site:
· At 102, the duplicating abilities of a viewer for displaying the document are disabled. Typically the duplicating abilities of the viewer are disabled at the publisher's side. This can be carried out, for example, by creating a special edition of a viewer which can decrypt the encrypted document and also can disable the duplicating abilities of the viewer. The special edition of the viewer may be shipped to the reader along with the encrypted document, or separately. However, disabling the duplicating abilities of a viewer can be carried out also at the reader's side. This can be carried out, for example, by an "add-in" application, i.e. a software utility or other program that can be added to a primary program.

At the reader's site:
· At 103, the document is decrypted, preferably by a security token which its ciphering logic corresponds to the ciphering logic of the security token used at 101. Of course, in some embodiments of the invention, the security token of 101 and the security token of 103 may be identical, or even the same token can be used.
· At 104, the document is selectively displayed while some of the duplicating functions, i.e. the printing, copying to the clipboard, saving, saving as, etc. functions of the viewer, are disabled, thereby the content of the document cannot be distributed in an unprotected form.

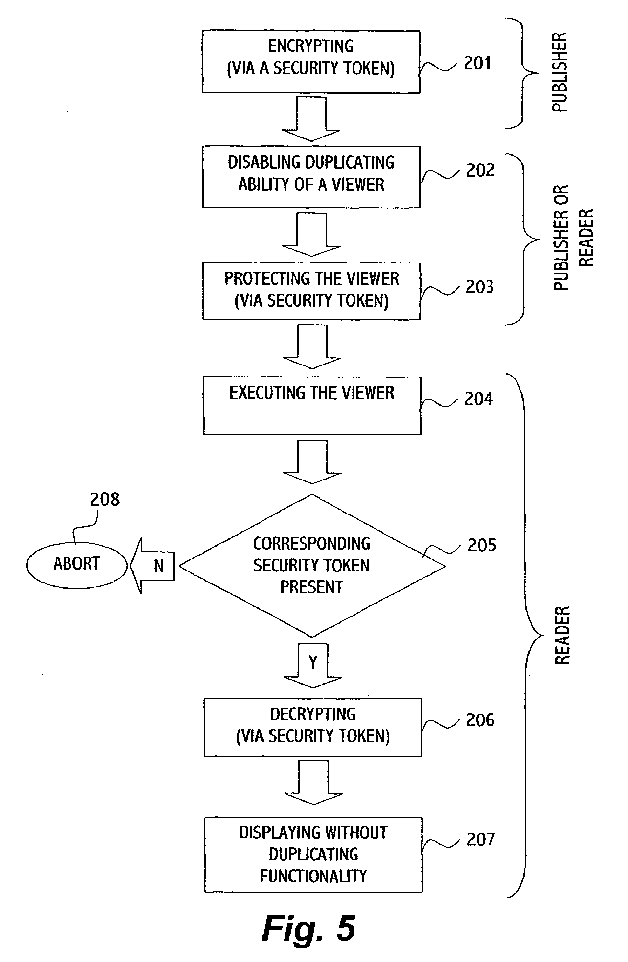

Fig. 5 is a flowchart of a process of rendering selective presentation of a document, wherein the viewer is protected by a security token, according to a preferred embodiment of the invention.

At the publisher's site:
· At 201, the document is encrypted. Preferably, the encryption is carried out by a security token.

At the publisher's site or at the reader's site:
· At 202, the duplicating abilities of a viewer for displaying the document are disabled.
· At 203, the viewer is protected by a security token. Thus, in order to use the viewer, the user has to insert a corresponding security token to the computer which runs the viewer. Nowadays there are a variety of security tokens for protecting software, e.g. the HASP, manufactured by Aladdin Knowledge Systems. Typically, protecting software is carried out by distributing encrypted code, and decrypting the code with the security token at the run time, for example at the time an EXE file is loaded into the computer's memory.

At the reader's site:
· At 204, the viewer is executed.
· From 205, if no corresponding security token is present on the machine that intends to execute the viewer, then the viewer can't be executed, and consequently the process is aborted at 208 without displaying the document. If a corresponding security token is present, then the process continues to 206.
· At 206, the document is decrypted, preferably by a security token where its ciphering logic corresponds to the ciphering logic of the security token used at 201. Of course, in some embodiments of the invention, the security token of 201 and the security token of 206 may be identical, either just functionally or even the same token.
· At 207, the document is displayed while the duplicating functions, i.e. the printing, copying to the clipboard, saving, saving as, etc. functions of the viewer are disabled, thereby the content of the document cannot be distributed.

In a preferred embodiment of the invention, the same security token used for protecting the viewer is the same security token used for encrypting the document. Thus, in this case the same security token used for running the viewer is the same security token used for decrypting the document.

It should be noted that the system and method presented herein provides a double protection since both, the viewer and the document are protected: the document can be displayed only upon introducing a suitable viewer, and the viewer can be executed also only upon introducing a suitable token. Hence, a "hacker" has to break two protection shields: the protection of the viewer and the protection of the document. Of course a security token can store a plurality of keys, and consequently the key used for protecting a viewer may differ from the key used for protecting a document.

Of course different viewing policies can be used. For example, if the security token used for encrypting is the same as the security token used for decrypting (can be identified for example by a unique ID embedded within the security token), then the duplicating abilities are not disabled. Alternatively or additionally, extended information may be stored in the token, by which license terms and/or viewing policy is defined.

As known to a person of ordinary skill in the art, storing a non-encrypted content on a storage media (e.g. computer's disk) is risky. Consequently, it is preferable that non-encrypted content may not be stored on the storage media (e.g. disk). Thus, the whole document should be stored only within the volatile memory on a computer, and in the case where the computer's volatile memory is not adequate, a part of the document is temporarily stored in an encrypted form on the storage media.

Typically, an encrypted document is sent to another party for being displayed. The document may be sent via a data communication link (e.g. communication network, email, etc.), by deliverable storage means such as a CD, and so forth. However, a document may be stored in an encrypted form on the same computer that was used for creating the document. This can be helpful in the case where a plurality of users share the same storage media (e.g. disk), but the confidentiality of the document's content is still required.

The ciphering logic may be based on asymmetric methods (i.e. wherein the key for encrypting differs from the key for decrypting), symmetric methods (i.e. wherein the key for encrypting is the same as the key for decrypting), one-time password, etc. Moreover, a hierarchical key scheme can also be applied, where the token is used to decrypt a session key which in turn is used to decrypt the content.

The invention is not limited to a certain type of document. For example, the invention may be implemented on Web documents (e.g. HTML files, script files) as well as on multimedia files (music files, image files, video files), text documents (e.g. generated by Word) as well as drawing documents (e.g. generated by the Autocad drawing editor).

It should be noted that from a practical point of view, a system based on the present invention may be designed such a way that only one party will have to use a security token, while the other party will have to use the encrypting or decrypting logic by a software module which is executed on his computer, as a substitute. For example, referring to a system that serves a distributor of manuals, the distributor may prefer that his computer will operate without any viewing restrictions, despite of the fact that the material stored within his computer becomes less secure. This will allow him not to be tied to a security token, which may get lost, etc. In this case the encrypting logic may be implemented by a computer program that operates on the distributor's computer without a security token, however in order to view a distributed manual, a user still will have to use a corresponding security token.

Those skilled in the art will appreciate that the invention can be embodied by other forms and ways, without losing the scope of the invention. The embodiments described herein should be considered as illustrative and not restrictive.

## Claims

1. A system for rendering selective presentation of a document, said system comprising:
- a ciphering logic, for securely storing the content of said document;
- at least one security token, wherein at least a part of said ciphering logic is embedded within said security token; and
- a selective presentation document viewer, operative in conjunction with said ciphering logic, for rendering selective presentation of said content of said document.

2. A system according to claim 1, wherein said selective presentation document viewer is secured by a security token and/or wherein said at least a part of said ciphering logic is selected from the group comprising: at least one key, at least one programming instruction.

3. A system according to claim 1 or 2, wherein said ciphering logic is selected from a group comprising: symmetric logic, asymmetric logic, one-time password logic.

4. A system for rendering selective presentation of a document, said system comprising:
- an encrypting logic, for securely storing the content of said document;
- a decrypting logic, corresponding to said encrypting logic, for decrypting the encrypted document, wherein at least a part of said decrypting logic is embedded within a first security token; and
- a selective presentation document viewer, operative in conjunction with said decrypting logic, for rendering selective presentation of a decrypted document.

5. A system according to claim 4, wherein said selective presentation document viewer is secured by a security token and/or further comprising a second security token, wherein at least a part of said encrypting logic is embedded within said second security token.

6. A system according to claim 4 or 5, wherein said at least a part of said encrypting logic is selected from the group comprising: at least one key, and at least one programming instruction.

7. A system according to one of the claims 4 to 6, wherein the ciphering logic is selected from a group comprising: symmetric logic, asymmetric logic, one-time password logic.

8. A system according to one of the claims 1 to 7, wherein said viewer is selected from a group comprising: word processor, Web browser, text editor, image editor, drawing editor, PDF viewer, multimedia player; and/or wherein the type of said document is selected from a group comprising: a Web page, a Word document, and a PDF document.

9. An apparatus for rendering selective presentation of a document, said apparatus comprising:
- a security token;
- a decrypting logic, for decrypting the encrypted document, wherein at least a part of said decrypting logic is embedded within said security token;
- a selective presentation document viewer, operative in conjunction with said decrypting logic, for rendering selective presentation of the decrypted document;

10. An apparatus according to claim 9, wherein said selective presentation document viewer is secured by a security token and/or wherein said at least a part of said encrypting logic is selected from the group comprising: at least one key, and at least one programming instruction.

11. An apparatus according to claim 9 or 10, wherein said viewer is selected from a group comprising: word processor, Web browser, text editor, image editor, drawing editor, PDF viewer, multimedia player, and/or wherein the ciphering logic is selected from a group comprising: symmetric logic, asymmetric logic, one-time password logic.

12. An apparatus according to one of the claims 9 to 11, wherein the type of said document is selected from a group comprising: a Web page, a Word document, and a PDF document.

13. A method for securely rendering selective presentation of a document, the method comprising the steps of:
- providing a security token, for hosting at least one part of a decrypting logic;
- providing a selective presentation document viewer, operative in conjunction with said decrypting logic, for rendering selective presentation of said document;
- encrypting said document by an encrypting logic corresponding to said decrypting logic;
- decrypting the encrypted document by said decrypting logic; and
- rendering selective presentation of said document by said viewer.

14. A method according to claim 13, further comprising protecting said viewer by said security token and/or wherein said at least a part of said encrypting and/or decrypting logic is selected from the group comprising: at least one key, at least one programming instruction.

15. A method according to claim 13 or 14, wherein said viewer is selected from a group comprising: a Web browser, a word processor, a text editor, a PDF editor, a PDF viewer, multimedia editor, multimedia player; and/or wherein the type of said document is selected from a group comprising: a Web page, a Word document, and a PDF document.

16. A method according to claim 15, wherein said Web page is selected from a group comprising: a HTML file, a script file, an image file, a Hover button.

17. A method according to one of the claims 13 to 16, wherein the ciphering method is based on the type selected from a group comprising: symmetric logic, asymmetric logic, one-time password logic, and/or further comprising enabling at least one of said duplicating functions according to a licensing policy thereof.
